# FASCICULE DE BREVET EUROPEEN

(11) **EP 3 257 720 B1**
(45) Date de publication et mention de la délivrance du brevet: **06.10.2021**
(21) Numéro de dépôt: 17172504.7
(22) Date de dépôt: 23.05.2017
(51) Int. Cl.: B62B 3/02, B62B 3/00, B62B 5/06

(54) **BASE DE TRANSPORT ROULANTE ET MODULABLE**
MODULARE TRANSPORTPLATTFORM AUF RÄDERN
MODULAR WHEEL BASE FOR TRANSPORT

(43) Date de publication de la demande: 20.12.2017
(73) Titulaire: Renault s.a.s, 92100 Boulogne-Billancourt (FR)
(72) Inventeur: RIO, Franck, 72330 Cerans-Foulletourte (FR)

(56) Documents cités:
- EP-A1- 2 687 420
- EP-A2- 2 687 429
- DE-U1-202012 104 418
- DE-U1-202013 100 611
- GB-A- 2 008 064
- GB-A- 2 190 895
- US-B1- 9 352 200

## Description

L'invention se rapporte à une base roulante modulable et capacitaire.

Une base roulante est généralement utilisée dans une installation industrielle ou un atelier pour convoyer des pièces ou marchandises d'un poste à un autre. Les bases roulantes existantes comportent généralement un châssis avec des roues en partie inférieure, une barre de manœuvre à l'une de leurs extrémités, et des moyens d'attelage. Ces moyens d'attelage peuvent par exemple être constitués d'un timon relevable possédant en extrémité un anneau ou un boitier pour coopérer avec un moyen d'attelage correspondant, qui est un doigt vertical, un crochet ou une sphère.

A titre d'exemple, la demande de brevet EP2687429 décrit une base roulante possédant un plateau supérieur monté en rotation sur un châssis autour d'un axe vertical, et des roues disposées en losange. La spécificité de cette base roulante est qu'elle possède un timon relevable doté d'une platine, et le châssis comporte des moyens de fixation particuliers de cette platine et/ou d'une entretoise interposée de façon démontable entre ledit châssis et ladite platine. L'entretoise a pour but de déporter l'attache du timon au châssis, de sorte que dans son état relevé le timon ne vienne pas interférer avec le coin du plateau tournant lorsque ce dernier est manœuvré en rotation par un opérateur. Néanmoins, une telle base roulante présente l'inconvénient d'être figée, et donc de ne pas pouvoir s'adapter facilement et rapidement à une configuration particulière de pièces et/ou de marchandises à transporter.

Le document GB2190895 divulgue un casier roulant pouvant être couplé à un autre casier roulant difficilement maniable autrement qu'en poussant en tirant sur les parois verticales.

Le document DE202013100611 U1 divulgue un chariot de transport comprenant un châssis sur lequel sont fixées des roues. Ce document pose un problème de maniabilité.

Une base roulante selon l'invention possède des caractéristiques structurelles lui permettant d'être montée de façon souple, pour pouvoir s'adapter à une grande variété de pièces, d'emballages et/ou de marchandises à transporter, ainsi qu'à une configuration particulière d'atelier ou d'installation industrielle.

Les notions de « supérieur », « inférieur » ou « vertical » doivent être considérées comme si la base roulante était montée et posée sur le sol.

L'invention a pour objet une base roulante dotée d'un châssis comprenant des tubes et des plaques.

La principale caractéristique d'une base roulante selon l'invention est que lesdits tubes et lesdites plaques sont soudés et sont percés de trous pour permettre une fixation par vissage de plusieurs éléments parmi lesquels un timon, une barre de poussée, un attelage manuel ou un attelage au pied, au moins un avaloir, au moins un anti-basculeur, une rallonge et au moins une cale de roulette. Autrement dit, les différents éléments constitutifs d'une base roulante selon l'invention, viennent se fixer par vissage sur le châssis, qui constitue l'élément principal de ladite base roulante. De cette manière, puisqu'un vissage est une technique de fixation qui est réversible, chacun desdits éléments peut être démonté et remonté à tout moment. Une telle base roulante peut ainsi être facilement transportée en étant démontée, puis être montée sur place, au dernier moment. Le châssis joue le rôle d'une plateforme adaptable en dimensions, notamment au niveau de la longueur et de la largeur, sur laquelle les éléments viennent se monter de façon réversible. En possédant des éléments démontables, une base roulante selon l'invention présente un caractère de grande modularité, car il demeure possible de venir fixer au châssis plusieurs versions d'un même élément. Il est important de signaler que le châssis possède généralement une forme simple, soit carrée soit rectangulaire, soit échancrée, et qu'il est très facile à fabriquer par soudage. Il est donc aisé de concevoir quelques modèles de châssis particuliers, en termes de forme et de dimensions, pour pouvoir répondre à une multiplicité de besoins au niveau des marchandises à convoyer, car les différents éléments aptes à venir se fixer sur ces châssis multiplient les différentes configurations de bases roulantes disponibles. La liste des éléments venant se fixer sur le châssis n'est pas exhaustive et peut intégrer des pièces supplémentaires servant ponctuellement, à répondre à un besoin particulier.

Avantageusement, les trous sont en surnombre sur le châssis par rapport au nombre d'éléments à fixer, permettant à au moins certains desdits éléments d'être fixés à au moins deux emplacements différents sur ledit châssis. Cette caractéristique du châssis accentue encore le caractère modulable d'une base roulante selon l'invention, en permettant à certains éléments d'être fixés à différents endroits dudit châssis. A titre d'exemple, la base roulante peut posséder un châssis rectangulaire et quatre roulettes pouvant, par exemple, être disposées en losange sur le châssis ou être disposées aux quatre coins dudit châssis. Il est également possible de mettre six roulettes sur un même châssis. Une telle configuration de base roulante pourrait être assimilable à un jeu de montage, pour lequel une pièce centrale serait percée d'une multitude de trous, et sur laquelle viendraient se fixer par vissage différents éléments pour aboutir au final à des objets de nature différente.

De façon préférentielle, le châssis est galvanisé afin d'éviter les risques de corrosion. Puisque la base roulante est amenée à être utilisée à l'intérieur ou à l'extérieur d'une installation ou d'un atelier, il est important de la protéger contre la corrosion qui pourrait dégrader la qualité de sa structure.

Préférentiellement, le châssis est délimité par quatre tubes externes définissant un cadre rectangulaire, des plaques étant soudées aux quatre coins du cadre pour la fixation des avaloirs et des anti-basculeurs. Le terme rectangulaire couvre la configuration « carrée ».

De façon avantageuse, une plaque est soudée au niveau d'une zone centrale et inférieure de chaque tube externe pour la fixation des cales de roulettes. Cette configuration du châssis favorise la fixation de roulettes en losange et en configuration six roulettes.

Avantageusement, la barre de poussée est soudée à une platine support, qui est vissée sur le châssis.

De façon préférentielle, la barre de poussée est galvanisée.

Préférentiellement, le timon est soudé à une platine support qui est vissée sur le châssis.

De façon avantageuse, le timon est galvanisé.

Avantageusement, la rallonge est constituée par un cadre tubulaire galvanisé qui est destiné à être inséré entre la barre de poussée et le châssis.

Une base roulante selon l'invention présente un caractère de grande modularité octroyé à la fois par la possibilité de concevoir facilement et rapidement quelques modèles de châssis particuliers, et par les multiples configurations de montage des différents éléments constitutifs de la base roulante, sur un même châssis. Elle a donc l'avantage de se décliner en un très grand nombre de versions pour pouvoir répondre à n'importe quel type de besoin lié à la manutention et au transport de pièces au sein d'un atelier. Elle présente enfin l'avantage de pouvoir être transportée facilement en étant démontée, et d'être montée au dernier moment dans une configuration particulière, en fonction des besoins rencontrés sur place au sein d'un atelier ou d'une installation particulière.

On donne ci-après, une description détaillée d'un mode de réalisation préféré d'une base roulante selon l'invention, en se référant aux figures suivantes :
- La figure 1A est une vue en perspective d'une base roulante, selon l'invention,
- La figure 1B est une vue en perspective éclatée de la base roulante de la figure 1A,
- La figure 2A est une vue en perspective sous un autre angle de la base roulante de la figure 1A,
- La figure 2B est une vue en perspective éclatée de la base roulante de la figure 2A,
- La figure 3 est une vue en perspective éclatée d'un châssis d'une base roulante selon l'invention,
- La figure 4 est une vue en perspective d'une barre de poussée d'une base roulante selon l'invention,
- La figure 5 est une vue en perspective d'un timon d'une base roulante selon l'invention,
- La figure 6 est une vue en perspective d'un attelage manuel d'une base roulante selon l'invention,
- La figure 7 est une vue en perspective d'un attelage au pied d'une base roulante selon l'invention,
- La figure 8 est une vue en perspective d'un avaloir d'une base roulante selon l'invention,
- La figure 9 est une vue en perspective d'une rallonge d'une base roulante selon l'invention,
- La figure 10 est une vue en perspective d'un anti-basculeur d'une base roulante selon l'invention,
- La figure 11 est une vue en perspective d'un autre mode de réalisation d'une base roulante selon l'invention.

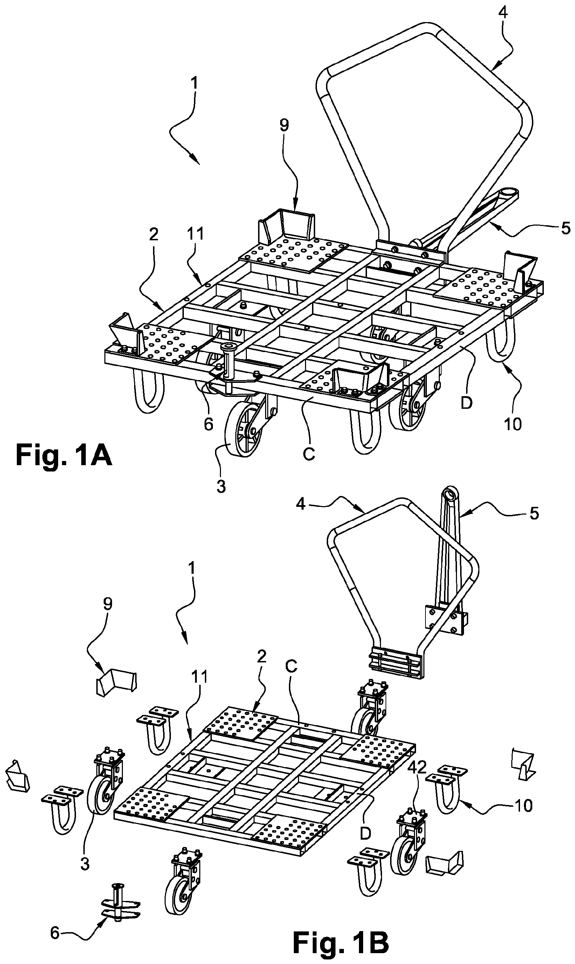

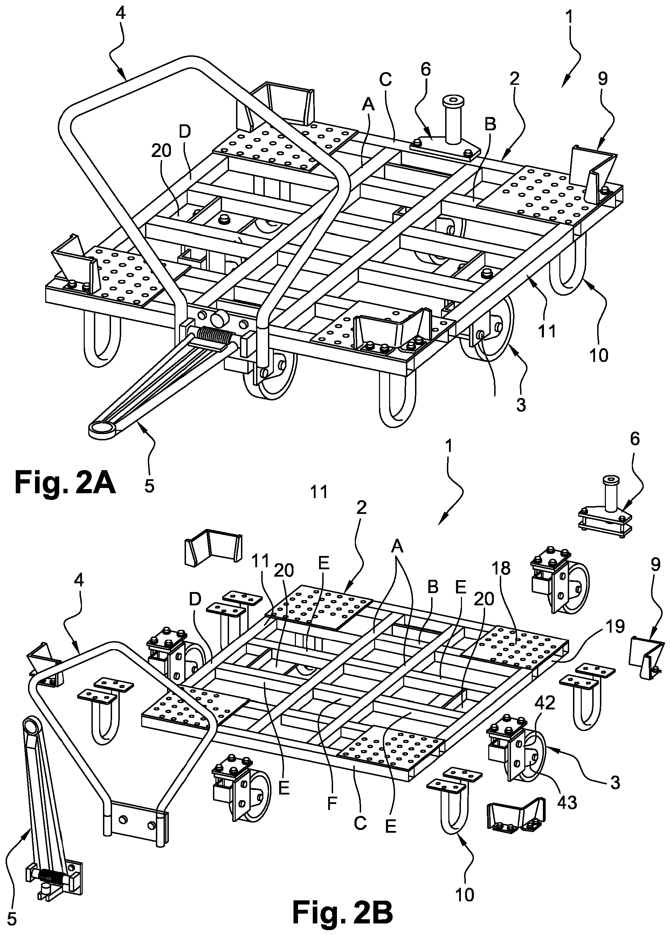

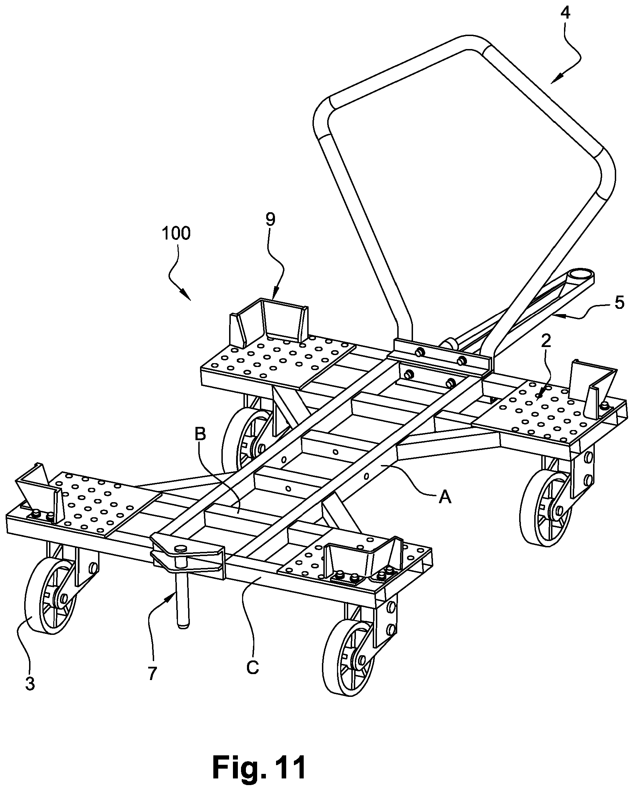

En se référant aux figures 1A, 1B, 2A et 2B une base roulante 1 selon l'invention comprend un châssis 2 de forme carrée, sur lequel sont montés par vissage tous les éléments constitutifs d'une telle base roulante 1. Ces éléments comprennent de façon non exhaustive, des roulettes 3, une barre de poussée 4, un timon 5, un attelage manuel 6 ou un attelage de pied 7, une rallonge 8, des avaloirs 9 et des anti-basculeurs 10. Le châssis 2 agit ainsi comme une plateforme centrale sur laquelle seront entreposées des pièces ou des marchandises à transporter, et sur laquelle viennent se monter par vissage les différents éléments de la base roulante 1. En se référant à la figure 11, selon un autre mode de réalisation préféré, la base roulante 100 peut également être échancrée en forme de H, par un simple retrait de certains tubes constituant la base roulante mentionnée ci-dessus.

Une fois que la base roulante a été montée, comme le montrent les figures 1A, 2A, 11 un cariste dépose sur le châssis 2 les pièces et/ou les marchandises à convoyer. Un tractoriste peut accrocher la ou les bases roulantes et les déplacer d'un point à un autre à l'aide d'un tracteur. Une fois arrivé au point d'acheminement, le tractoriste se saisit ensuite de la barre de poussée 4 pour exercer un effort de poussée ou de traction afin de déplacer la base roulante par l'intermédiaire des roulettes 3, dont certaines sont mobiles en rotation. De cette manière, le tractoriste peut déplacer la base roulante 1 à sa convenance, pour notamment la positionner au poste de travail dans le sens souhaité.

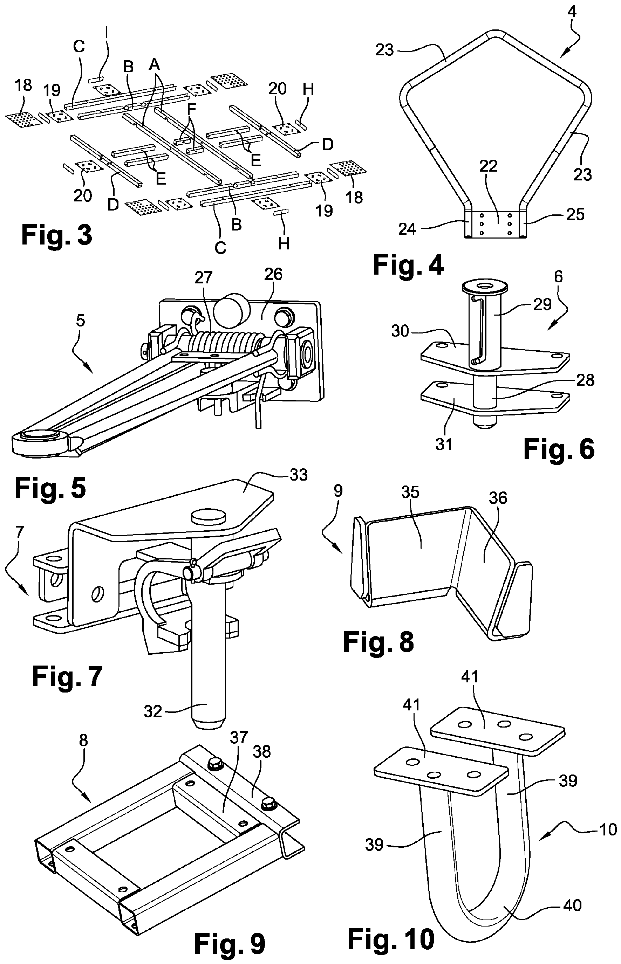

En se référant aux figures 2B et 3, le châssis 2 est constitué par un cadre 11 de forme carrée, comprenant des tubes et des plaques soudés. Le cadre 11 est galvanisé afin de limiter les risques de corrosion dans le cas d'une utilisation externe. Il possède des découpes laser afin de faciliter les posages pour la soudure, et gagner du temps en réalisation. Plus précisément, le cadre est constitué de deux tubes parallèles A venant se souder sur deux tubes parallèles B et deux tubes C perpendiculairement aux tubes A, l'association de ces 6 tubes formant une structure en forme de H et correspond au mode de réalisation de la base roulante 100 illustrée à la figure 11. Quatre tubes E viennent se souder perpendiculairement aux deux tubes D et A. Deux tubes F viennent se souder perpendiculairement aux 2 tubes A. La longueur des tubes A définit la longueur de la base roulante 1, 100 et par conséquent la longueur des tubes D. La largeur de la base roulante 1, 100 est définie par la longueur des tubes B et C et par conséquent impacte la longueur des quatre tubes E. L'absence des tubes D et E permet de créer une base roulante à double échancrures comme illustré à la figure 11. En ne soudant pas d'un côté seulement deux tubes E et un tube D, on créé une base roulante a simple échancrure. Des premières plaques 18 rectangulaires et dotées de trous sont soudées aux quatre coins du cadre 11 et constituent partiellement une face supérieure du cadre 11. Chacune des plaques 18 est soudée sur les tubes B et C. Aux quatre coins dudit cadre 11 sont également soudées des deuxièmes plaques 19 constituant partiellement une face inférieure du cadre 11.Chacune de ces plaques 19 est soudée sur les tubes B et C. De cette manière, au sein de la base roulante 1, chaque première plaque 18 se retrouve au droit d'une deuxième plaque 19 en étant placée au dessus de celle-ci. Deux troisièmes plaques 20 sont soudées sur les tubes E et deux troisièmes plaques 20 sont soudées sur les tubes B et C et constituent partiellement une face inférieure du cadre 11. Les voiles de renfort des plaques 20 soudées sur les tubes E sont eux aussi soudés sur les tubes E. Les voiles de renfort des plaques 20 soudées sur les tubes B et C sont soudés sur les tubes B et C. Le voile H de la plaque 20 qui elle-même est soudée sur les tubes B et C est soudé sur les tubes A et le voile I de la plaque 20 qui est soudée sur les deux tubes B et C est lui soudé sur les tubes A. Il faut noter que l'ensemble du cadre 2 de la base roulante 1 est constituée d'un seul type de tube et de 1 seule épaisseur de tôle.

En se référant à la figure 4, la barre de poussée 4, qui sert à manœuvrer la base roulante 1 manuellement et ergonomiquement, est tubulaire et est soudée à une platine support 22, qui est destinée à être fixée par vissage sur l'un des tubes externes 12 du châssis 2. La barre de poussée 4 est composée d'un seul tube cintré, de manière à former une boucle ouverte. Les deux extrémités 24, 25 de cette boucle sont soudées à la platine 22. La barre de poussée 4 est galvanisée. Elle permet à l'opérateur, de par sa forme en partie basse, de laisser l'espace nécessaire pour baisser le timon 5 à l'aide du pied, sans avoir à se baisser. Sa cambrure vers l'avant permet à l'opérateur de manipuler la base roulante 1 par la barre de poussée 4, tout en gardant un passage de main sécurisé par rapport à l'emballage posé sur la base roulante 1. Avantageusement, le tube cintré qui compose la barre de poussée 4, comporte en partie supérieure deux demi bras 23 obliques se rejoignant au centre à une hauteur supérieure à celle des extrémités latérales. Cette forme facilite la prise de la barre de poussée par un opérateur à la hauteur qui lui convient le mieux, indépendamment de sa taille.

En se référant à la figure 5, le timon 5, qui sert à accrocher deux bases roulantes 1 ou à accrocher une base roulante à un tracteur, est directement repris d'un timon déjà existant. Le timon 5 possède une plaque support 26, et la largeur dudit timon 5 et de ladite plaque support 26 laisse la possibilité de passer une interface d'accrochage pour un tireur pousseur, qui est un équipement aidant à la manutention quand l'effort requis pour déplacer la base roulante est supérieur à 17 DAN. Ce timon 5 est équipé d'un ressort 27 lui permettant, en position non attelé, de remonter perpendiculairement au châssis 2 afin de limiter l'encombrement hors tout, et le risque pour l'opérateur de buter dans celui-ci. Le timon 5 est équipé d'un tampon permettant de limiter sa course en position basse et d'un tampon limitant sa course en position verticale. L'ensemble du timon 5, comprenant le ressort 27 et la plaque support 26 est électro-zingué. Il est soit fixé sur un tube C ou D suivant le sens de traction souhaité.

En se référant à la figure 6, l'attelage manuel 6, qui permet d'accrocher deux bases 1 entre elles avec un verrouillage manuel, est constitué d'un axe mobile 28 dans un tube 29. Des lumières positionnées sur le tube 29 permettent d'immobiliser l'axe 28 en partie haute ou en partie basse. Le tout est destiné à être fixé par vissage à l'aide de deux plaques 30, 31 à l'arrière du châssis 2 sur un tube externe C mais il peut être suivant le sens de traction souhaité être fixé sur un tube D de celui-ci. L'ensemble de cet attelage manuel est électro-zingué. L'idée est de garder le timon 5 de la base 1 roulante dans l'axe des tubes du châssis 2, pour avoir un meilleur comportement et une meilleure résistance des matériaux pendant les opérations d'accélération et de freinage d'un train de bases roulantes 1, tout en évitant le risque de décrochage.

En se référant à la figure 7, l'attelage au pied 7 permet également d'accrocher deux bases 1 roulantes entre elles, mais uniquement avec le pied sans y mettre les mains. Il est constitué d'un axe 32 soudé sur deux plaques 33 dont l'une n'est pas visible sur la figure. L'ensemble constitué par l'axe 32 et les deux plaques 33 est destiné à être vissé sur le châssis 2 de la base roulante 1. Il est électro-zingué. Un système de « binette », en d'autres termes de « pivot gravitaires », permet de verrouiller le timon 5 en position haute afin de garder le timon 5 dans l'axe du châssis 2, comme pour l'accrochage main. Le système est gravitaire et sans pilotage par un fluide. Un seul appui du pied permet de décrocher le timon 5 en faisant basculer la « binette » et en baissant le timon 5 sous le pion d'ancrage.

En se référant à la figure 8, les avaloirs 9, qui permettent de localiser les marchandises à convoyer sur la base roulante 1, sont des pièces présentant deux faces 35, 36 sensiblement à angle droit. Ils sont démontables et en tôle. Ils sont destinés à être fixés par quatre boulons aux premières plaques 18 du châssis 2. Ils peuvent donc être positionnés à différents endroits sur lesdites plaques 18, en raison du grand nombre de trous présents sur lesdites plaques 18. Ces avaloirs 9 sont galvanisés.

En se référant à la figure 9, la rallonge 8 est tubulaire et en tôle. Elle est galvanisée et fixée au châssis 2 par vissage. Elle permet aux bases roulantes 1 de grandes dimensions d'améliorer l'angle de giration. Quand la base 1 roulante est utilisée avec une rallonge 8, la barre de poussée 4 étant fixée sur le support timon 5 se décale de la valeur de la rallonge 8. L'objectif étant de rester ergonomique pour l'opérateur, c'est-à-dire garder le même éloignement de l'opérateur par rapport à la barre de poussée 4. Elle peut aussi permettre d'utiliser des accessoires comme un plateau tournant, tout en gardant les charges en position centrale, car elle éloigne la barre de poussée 4 et libère de l'espace nécessaire à la rotation du plateau. Cette rallonge 8 forme un cadre rectangulaire dont un coté 37 est soudé à une plaque support 38. La rallonge 8 est ainsi fixée au châssis 2 par vissage, via ladite plaque support 38.

En se référant à la figure 10, chaque anti-basculeur 10 est un tube cintré monobloc. Les extrémités libres du tube cintré sont prolongées chacune par une plaque support 41 plane, dont le plan est perpendiculaire aux parties droites du tube cintré. Chaque anti-basculeur 10 est fixé par vissage à une deuxième plaque 19 du châssis 2, via les deux plaques support 41 qui viennent au contact desdites plaques 19. Une fois monté sur le châssis, le segment arrondi 40 de chaque anti-basculeur 10 est apte à venir au contact du sol. Les anti-basculeurs 10 servent à éviter le basculement de la base roulante 1 dans le cas d'une configuration à quatre roulettes 3, disposées en losange. Chaque anti-basculeur 10 est aussi galvanisé.

En se référant aux figures 1B et 2B, les roulettes 3 sont montées sur les troisièmes plaques 20 du châssis 2 par l'intermédiaire de cales 42 de roulettes, qui servent d'interface entre ledit châssis 2 et une platine 43 de fixation de la roulette 3 lorsque la base roulante 1 possède quatre roulettes 3 disposées en losange ou possèdent six roulettes 3. L'objectif est de créer un décalage vertical sur les roulettes 3 fixes afin de générer un effet de bascule permettant une meilleure manœuvrabilité. Les cales 42 de roulettes 3 sont elles aussi galvanisées.

Suivant les différents types de base roulante utilisée, les roulettes 3 sont différentes :
- Les bases roulantes 1 ayant des roulettes 3 au coin, ou échancrées, sont équipées de deux roulettes 3 suspendues et fixes du côté opposé à la barre de poussée 4 et de deux roulettes suspendues et pivotantes coté barre de poussée 4.
- Les bases roulantes 1 ayant des roulettes 3 disposées en losange sont équipées de deux roulettes 3 suspendues et fixes pour les roulettes 3 positionnées dans l'axe central avec décalage en Z, d'une roulette 3 suspendue et pivotante à l'avant et d'une roulette 3 suspendue pivotante, détarée à débattement libre à l'arrière avec décalage en Z.
- Les bases roulantes équipées de six roulettes 3 sont équipées de quatre roulettes 3 suspendues et pivotantes positionnées dans les angles de la base roulante 1. Les deux roulettes 3 côté opposé à la barre de poussée 4, sont détarées et à débattement libre avec décalage en Z. Les roulettes 3 situées dans l'axe de la base roulante 1 sont suspendues et fixe. De par sa conception, la base roulante 1 peut accepter jusqu'à 1500 kg de marchandises pour les bases roulantes 1 avec des roulettes disposées en losange, et 2000 kg pour les bases roulantes avec des roulettes disposées en carré ou en configuration six roues.

## Revendications

1. Base roulante (1) dotée d'un châssis (2) comprenant des tubes (A, B, C, D, E, F, G) et des plaques (18, 19, 20), soudés et percés de trous permettant une fixation par vissage de plusieurs éléments parmi lesquels un timon (5), une barre de poussée (4), un attelage manuel (6) ou un attelage au pied (7), au moins un avaloir (9), au moins un anti-basculeur (10), une rallonge (8) et au moins une cale (42) de roulette, **caractérisé en ce qu'**elle comprend :
- le timon (5) équipé d'un ressort (27) lui permettant en position non attelé de remonter perpendiculairement au châssis (2), et
- la barre de poussée (4) composée d'un seul tube cintré de forme de boucle ouverte en partie basse qui laisse un espace nécessaire pour baisser le timon (5), et qui comporte en partie supérieure deux demi bras (23) obliques se rejoignant au centre à une hauteur supérieure à celle des extrémités latérales.

2. Base roulante selon la revendication 1, **caractérisé en ce que** les trous sont en surnombre sur le châssis (2) par rapport au nombre d'éléments à fixer, permettant à au moins certains desdits éléments d'être fixés à au moins deux emplacements différents sur ledit châssis (2).

3. Base roulante selon l'une quelconque des revendications 1 à 2, **caractérisé en ce que** le châssis est galvanisé afin d'éviter les risques de corrosion.

4. Base roulante selon l'une quelconque des revendications 1 à 3, **caractérisée en ce que** le châssis (2) est délimité par quatre tubes externes (C, D) définissant un cadre (11) rectangulaire, et **en ce que** des plaques (18, 19) sont soudées aux quatre coins du cadre (11) aux tubes (B, C) et sur lesquelles sont fixés des avaloirs (9) et/ou des anti-basculeurs (10).

5. Base roulante selon la revendication 4, **caractérisée en ce qu'**une plaque (20) est soudée au niveau d'une zone centrale et inférieure de chaque tube externe (C, D), sur laquelle sont fixées des cales (42) de roulettes (3).

6. Base roulante selon l'une quelconque des revendications 1 à 5, **caractérisée en ce que** la barre de poussée (4) est soudée à une platine support (22), qui est vissée sur le châssis (2).

7. Base roulante selon l'une quelconque des revendications 1 à 6, **caractérisée en ce que** la barre de poussée (4) est galvanisée.

8. Base roulante selon l'une quelconque des revendications 1 à 7, **caractérisée en ce que** le timon (5) est soudé à une platine support (26) qui est vissée sur le châssis (2).

9. Base roulante selon l'une quelconque des revendications 1 à 8, **caractérisée en ce que** le timon (5) est galvanisé.

10. Base roulante selon l'une quelconque des revendications 1 à 9, **caractérisée en ce que** la rallonge (8) est constituée par un cadre tubulaire galvanisé inséré entre la barre de poussée (4) et le châssis (2).

## Patentansprüche

1. Plattform (1) mit Rädern, die mit einem Fahrgestell (2) versehen ist, das Rohre (A, B, C, D, E, F, G) und Platten (18, 19, 20) umfasst, die verschweißt und mit Löchern versehen sind, die ein Festschrauben von mehreren Elementen gestatten, darunter eine Anhängerdeichsel (5), eine Schubstange (4), eine Handanhängekupplung (6) oder eine Fußanhängekupplung (7), mindestens einen Aufnahmeschuh (9), mindestens eine Kippschutzvorrichtung (10), ein Verlängerungsstück (8) und mindestens einen Laufrollenkeil (42), **dadurch gekennzeichnet, dass** sie Folgendes umfasst:
- die Anhängerdeichsel (5), die mit einer Feder (27) versehen ist, dank derer sie in der nicht angekuppelten Position senkrecht zum Fahrgestell (2) hochgeklappt werden kann, und
- die Schubstange (4), die aus einem einzigen gebogenen Rohr besteht, dessen unterer Teil die Form einer offenen Schlaufe hat, die einen Raum zum Absenken der Anhängerdeichsel (5) belässt, und dessen oberer Teil zwei schräge Halbarme (23) aufweist, die in der Mitte auf einer Höhe aufeinandertreffen, die höher als jene der seitlichen Enden ist.

2. Plattform mit Rädern nach Anspruch 1, **dadurch gekennzeichnet, dass** in dem Fahrgestell (2) in Bezug auf die Zahl von zu befestigenden Elementen eine größere Zahl von Löchern vorliegt, wodurch mindestens gewisse Elemente an mindestens zwei verschiedenen Stellen an dem Fahrgestell (2) befestigt werden können.

3. Plattform mit Rädern nach einem der Ansprüche 1 bis 2, **dadurch gekennzeichnet, dass** das Fahrgestell verzinkt ist, um Korrosionsrisiken zu vermeiden.

4. Plattform mit Rädern nach einem der Ansprüche 1 bis 3, **dadurch gekennzeichnet, dass** das Fahrgestell (2) durch vier äußere Rohre (C, D) begrenzt ist, die einen rechteckigen Rahmen (11) definieren, und dass Platten (18, 19) an den vier Ecken des Rahmens (11) an die Rohre (B, C) geschweißt sind, und an diesen Aufnahmeschuhe (9) und/oder Kippschutzvorrichtungen (10) befestigt sind.

5. Plattform mit Rädern nach Anspruch 4, **dadurch gekennzeichnet, dass** eine Platte (20) an einem mittleren und unteren Bereich jedes äußeren Rohrs (C, D) angeschweißt ist, woran Keile (42) für Laufrollen (3) befestigt sind.

6. Plattform mit Rädern nach einem der Ansprüche 1 bis 5, **dadurch gekennzeichnet, dass** die Schubstange (4) an eine Stützplatte (22) geschweißt ist, die an das Fahrgestell (2) geschraubt ist.

7. Plattform mit Rädern nach einem der Ansprüche 1 bis 6, **dadurch gekennzeichnet, dass** die Schubstange (4) verzinkt ist.

8. Plattform mit Rädern nach einem der Ansprüche 1 bis 7, **dadurch gekennzeichnet, dass** die Anhängerdeichsel (5) an eine Stützplatte (26) geschweißt ist, die an das Fahrgestell (2) geschraubt ist.

9. Plattform mit Rädern nach einem der Ansprüche 1 bis 8, **dadurch gekennzeichnet, dass** die Anhängerdeichsel (5) verzinkt ist.

10. Plattform mit Rädern nach einem der Ansprüche 1 bis 9, **dadurch gekennzeichnet, dass** das Verlängerungsstück (8) aus einem verzinkten rohrförmigen Rahmen besteht, der zwischen der Schubstange (4) und dem Fahrgestell (2) eingeführt ist.

## Claims

1. Wheeled platform (1) provided with a chassis (2) comprising tubes (A, B, C, D, E, F, G) and plates (18, 19, 20) that are welded and drilled with holes allowing attachment, by screw-fitting, of multiple elements including a draw bar (5), a push bar (4), a hand-hitch (6) or a foot-hitch (7), at least one gully (9), at least one anti-tipping element (10), an extension (8) and at least one castor spacer (42), **characterized in that** it comprises:
- the draw bar (5) equipped with a spring (27) by which, when unhitched, it can rise up perpendicular to the chassis (2), and
- the push bar (4) consisting of a single curved tube in the shape of an open loop in the lower part which leaves a space required for lowering the draw bar (5), and which comprises, in the upper part, two oblique half-arms (23) that meet at the centre at a height greater than that of the lateral ends.

2. Wheeled platform according to Claim 1, **characterized in that** the chassis (2) has many more holes than elements that are to be attached, such that at least some of said elements can be attached to said chassis (2) at at least two different locations.

3. Wheeled platform according to any one of Claims 1 to 2, **characterized in that** the chassis is galvanized in order to avoid the risk of corrosion.

4. Wheeled platform according to any one of Claims 1 to 3, **characterized in that** the chassis (2) is delimited by four outer tubes (C, D) defining a rectangular frame (11), and **in that** plates (18, 19) are welded to the tubes (B, C) at the four corners of the frame (11), and to these are attached gullies (9) and/or anti-tipping elements (10).

5. Wheeled platform according to Claim 4, **characterized in that** a plate (20) is welded to a central and lower region of each outer tube (C, D), and to this there are attached spacers (42) for castors (3).

6. Wheeled platform according to any one of Claims 1 to 5, **characterized in that** the push bar (4) is welded to a support plate (22) that is screw-fitted to the chassis (2).

7. Wheeled platform according to any one of Claims 1 to 6, **characterized in that** the push bar (4) is galvanized.

8. Wheeled platform according to any one of Claims 1 to 7, **characterized in that** the draw bar (5) is welded to a support plate (26) that is screw-fitted to the chassis (2).

9. Wheeled platform according to any one of Claims 1 to 8, **characterized in that** the draw bar (5) is galvanized.

10. Wheeled platform according to any one of Claims 1 to 9, **characterized in that** the extension (8) consists of a galvanized tubular frame inserted between the push bar (4) and the chassis (2).
